# EUROPÄISCHE PATENTANMELDUNG

(11) **EP 4 837 753 A1**
(43) Veröffentlichungstag der Anmeldung: **11.11.2026**
(21) Anmeldenummer: 25174737.4
(22) Anmeldetag: 07.05.2025
(51) Int. Cl.: B60C 11/03, B60C 15/06, B60C 15/00

(54) **FAHRZEUGLUFTREIFEN FÜR NUTZFAHRZEUGE**

(71) Anmelder: Continental Reifen Deutschland GmbH, 30175 Hannover (DE)
(72) Erfinder: Hengesbach, Frank, 30175 Hannover (DE); Gastrich, Holger, 30175 Hannover (DE); Kleffmann, Jens, 30175 Hannover (DE); Steinlüke, Frank, 30175 Hannover (DE)
(74) Vertreter: Continental Corporation

(57) **Zusammenfassung**

Fahrzeugluftreifen für Nutzfahrzeuge,
umfassend zumindest eine Wulst und einen Laufstreifen (20) mit einem eine Rillentiefe definierenden Rillenprofil,
wobei der Laufstreifen (20) eine radial außen verlaufende Lauffläche und eine zu der Laufflächenperipherie parallel verlaufende, von der Lauffläche in Höhe der Rillentiefe beabstandete Begrenzungsfläche aufweist,
wobei ein durch das Rillenprofil definiertes Rillenleervolumen 1% bis 10% eines durch die Lauffläche, die Begrenzungsfläche und schulterseitige Flankenabschnitte (23) des Laufstreifens (20) definierten Reifenprofilvolumens beträgt,
wobei die Wulst einen Wulstkern (5), eine an den Wulstkern (5) angrenzende erste Wulstfüllung (6b) und eine an die erste Wulstfüllung angrenzende zweite Wulstfüllung (6a) umfasst,
wobei ein Spannungswert bei 100% Dehnung - ermittelt nach DIN 53504 mit dem Prüfkörpertyp S3 - der ersten Wulstfüllung 120% bis 6000% eines Spannungswertes der zweiten Wulstfüllung beträgt,
wobei eine Rückprallelastizität bei 70°C - ermittelt nach ISO 4662 mit einem Prüfkörper mit einer Dicke von 6,3 mm ± 0,5 mm- der zweiten Wulstfüllung 110% bis 300% einer Rückprallelastizität der ersten Wulstfüllung beträgt,
und eine Querschnittsfläche der ersten Wulstfüllung (6b) 60% bis 160% einer Querschnittsfläche des Wulstkernes (5) ist.

## Beschreibung

Die Erfindung betrifft einen Fahrzeugluftreifen für Nutzfahrzeuge, umfassend zumindest eine Wulst und einen Laufstreifen mit einem eine Rillentiefe definierenden Rillenprofil, wobei der Laufstreifen eine radial außen verlaufende Lauffläche und eine zu der Laufflächenperipherie parallel verlaufende, von der Lauffläche in Höhe der Rillentiefe beabstandete Begrenzungsfläche aufweist, wobei ein durch das Rillenprofil definiertes Rillenleervolumen 1% bis 10% eines durch die Lauffläche, die Begrenzungsfläche und schulterseitige Flankenabschnitte des Laufstreifens definierten Reifenprofilvolumens beträgt.

Um den Rollwiderstand von Fahrzeugluftreifen zu senken, ist bereits eine Vielzahl von Maßnahmen vorgeschlagen worden, beispielsweise eine Reduktion der Profiltiefe oder eine Verringerung der Laufstreifenbreite. Diese Maßnahmen zielen darauf ab, das beim Abrollen zu deformierende Gummivolumen zu reduzieren. Darüber hinaus verringern spezielle Laufstreifencompounds den Rollwiderstand, beispielsweise solche, die einen geringen Füllstoffanteil aufweisen. Eine Vielzahl von veröffentlichten Patentanmeldungen und Patenten befasst sich mit dem Thema, den Rollwiderstand von Nutzfahrzeugreifen zu senken, um den Kraftstoffverbrauch eines Fahrzeuges zu reduzieren.

Reifen für Nutzfahrzeuge mit Laufstreifen mit Umfangsrippen und Umfangsrillen weisen ein Rillenleervolumen auf, welches häufig mindestens 10% des Reifenprofilvolumens des Laufstreifens beträgt. Eine Erhöhung des Gummivolumens des Laufstreifens zu Lasten des Rillenleervolumens würde lediglich eine Erhöhung der Lebensdauer des Reifens erwarten lassen.

Ein Fahrzeugluftreifen für Nutzfahrzeuge ist beispielsweise aus der EP 2 292 448 B1 bekannt. Die EP 2 292 448 B1 offenbart einen Fahrzeugluftreifen für Nutzfahrzeuge mit einem Laufstreifen mit zumindest drei in Umfangsrichtung verlaufenden Umfangsrillen, welche den Laufstreifen in Umfangsrippen gliedern, wobei eine parallel zur Laufstreifenperipherie im Laufstreifen verlaufende, die tiefste(n) Umfangsrille(n) von radial innen berührende Einhüllende gemeinsam mit der Laufstreifenperipherie und schulterseitigen Flankenabschnitten ein Laufstreifen-Bruttovolumen definiert und sämtliche Rillen im Laufstreifen ein Rillenleervolumen definieren.

Ein Fahrzeugluftreifen für Nutzfahrzeuge ist beispielsweise auch aus der DE 10 2022 207 875 A1 bekannt. Die DE 10 2022 207 875 A1 offenbart einen Nutzfahrzeugreifen mit Wulstbereichen mit jeweils einem Wulstkern, einem auf dem Wulstkern radial außen aufsitzenden, zweiteiligen Apex und einem Hornprofil, sowie ferner einer um die Wulstkerne umgeschlagenen, ein- oder mehrlagigen Karkasseinlage, wobei sich jeder Apex aus einem radial äußeren Apexteil (zweite Wulstfüllung) und einem den Wulstkern kontaktierenden, radial inneren Apexteil (erste Wulstfüllung) zusammensetzt, wobei der radial äußere Apexteil und der radial innere Apexteil jeweils aus einem Gummimaterial bestehen und sich das Gummimaterial des radial äußeren Apexteils vom Gummimaterial des radial inneren
Apexteils unterscheidet.

Im weiteren Textverlauf werden die Begriffe "radial innerer Apexteil" und "erste Wulstfüllung" synonym verwendet.

Im weiteren Textverlauf werden die Begriffe "radial äußerer Apexteil" und "zweite Wulstfüllung" synonym verwendet.

Es ist bekannt, dass die Ausgestaltung der Wulstbereiche eines Fahrzeugluftreifens für Nutzfahrzeuge maßgeblich die Fahrstabilität, das Lenkverhalten, den Einfederungskomfort, die Wulsthaltbarkeit sowie den Sitz des Reifens auf der Felge beeinflusst. Dabei ist es insbesondere von Bedeutung, Steifigkeitssprünge in den Wulstbereichen zu vermeiden und einen möglichst gleichmäßigen (fließenden) Steifigkeitsverlauf sicherzustellen. Im Bereich der Wulstkerne
ist die Steifigkeit am größten, wobei die Wulstkerne für einen sicheren und festen Sitz des Reifens auf der Felge verantwortlich sind. In den dünner ausgeführten Seitenwandbereichen ist die Steifigkeit geringer als in der Nähe der Wulstkerne, wodurch der Reifen beim Abrollen periodisch einfedern kann (Walkarbeit).

Eine zu große Einfederung führt zu einer höheren Walkarbeit und damit zu einer thermischen Erwärmung, wodurch der Reifen Schäden erleiden kann. Über den Apex wird die Steifigkeit und der Steifigkeitsverlauf im Wulst- und Seitenwandbereich beeinflusst. Die Einfederung sollte dabei nicht zu nahe an den Felgenhörnern der Felge stattfinden, da dies die Gefahr erhöht, dass sich der Reifen an den Felgenhörner verformt und die Wulstbereiche des Reifens beschädigt werden. Treten an den Wulstbereichen Schäden auf, kommt eine Runderneuerung des Reifens im Bereich des Laufstreifens in der Regel nicht mehr in Frage.

Typischerweise werden einteilige Apexe aus einem einzigen Gummimaterial mit einer "mittleren" oder "geringen" Steifigkeit verwendet. Aufgrund ihrer dreieckförmigen Querschnittsform sorgen auch einteilige Apexe für einen entsprechenden Steifigkeitsverlauf im Wulst- und Seitenwandbereich, wobei die einteiligen Apexe den mehrteiligen Apexen in dieser Hinsicht deutlich unterlegen sind. Einteilige Apexe sind also im Hinblick auf die Wulsthaltbarkeit nicht optimal, haben sich jedoch bei entsprechender Auswahl des Gummimaterials im Hinblick auf den Rollwiderstand als günstig erwiesen.

Die bisher bekannten mehrteiligen Apexe aus zumindest zwei Apexteilen, bei welchen es üblich ist, dass der eine Apexteil aus einem Gummimaterial mit einer größeren Steifigkeit und der andere Apexteil aus einem Gummimaterial mit einer geringen Steifigkeit besteht, sind für die Wulsthaltbarkeit besonders vorteilhaft, sodass die Gefahr von Reifenschäden im Wulstbereich reduziert ist und der Nutzfahrzeugreifen folglich üblicherweise für eine Runderneuerung in Betracht gezogen wird.

Bei der Auslegung und Ausgestaltung von Apexen und des Reifenprofils besteht somit ein bisher nur unzureichend gelöster Zielkonflikt zwischen dem Rollwiderstand und der unmittelbar mit der Runderneuerbarkeit in Zusammenhang stehenden Wulsthaltbarkeit.

Eine zusätzlich erhöhte Anforderung an moderne Reifen entsteht aufgrund der Elektrifizierung von LKWs und Bussen, mit denen eine erhöhte Gewichtsbelastung einhergeht. Die höhere Last (Auflastung) stellt eine besondere Herausforderung dar, da mit ihr die thermische und mechanische Belastung der Reifen durch stärkere Deformation im Wulst wie auch im Profil steigt und somit die Haltbarkeit sinkt.

Der Erfindung liegt daher die Aufgabe zugrunde, den Rollwiderstand eines Fahrzeugluftreifens für Nutzfahrzeuge wirkungsvoll durch einfache Maßnahmen zu senken, ohne dass negative Auswirkungen auf andere Laufstreifeneigenschaften sowie den Abrieb und die Lebenserwartung des Reifens zu erwarten sind, und darüber hinaus die Haltbarkeit des Reifens zu erhöhen bzw. die Haltbarkeit des aufgelasteten Reifens auf das Niveau des nicht aufgelasteten Reifens zu verbessern.

Gelöst wird die gestellte Aufgabe erfindungsgemäß dadurch,
- dass das Rillenleervolumen 1% bis 10% des Reifenprofilvolumens beträgt,
- dass der Spannungswert bei 100% Dehnung - ermittelt nach DIN 53504 mit dem Prüfkörpertyp S3 - der ersten Wulstfüllung 120% bis 6000% des Spannungswertes der zweiten Wulstfüllung beträgt,
- dass die Rückprallelastizität bei 70°C - ermittelt nach ISO 4662 mit einem Prüfkörper mit einer Dicke von 6,3 mm ± 0,5 mm - der zweiten Wulstfüllung 110% bis 300% der Rückprallelastizität der ersten Wulstfüllung beträgt,
- dass die Querschnittsfläche der ersten Wulstfüllung 60% bis 160% der Querschnittsfläche des Wulstkernes ist.

Durch eine Erhöhung des Gummivolumens im Laufstreifen wird der Rollwiderstand merklich reduziert. Bei einem Rillenleervolumen von bis zu 10% des Reifenprofilvolumens wird die Profilsteifigkeit in radialer Richtung derart erhöht, dass die Deformationsamplitude des Laufstreifens in einem Ausmaß reduziert wird, welches eine Überkompensation des zu erwartenden Effektes - Verschlechterung des Rollwiderstandes durch mehr vorhandenen Gummi - bewirkt. Der Rollwiderstand des Reifens ist somit geringer.

Gemäß der Erfindung weist der radial innere Apexteil eine deutlich kleinere Querschnittsfläche auf als es bisher üblich ist, wobei die Querschnittsfläche des radial inneren Apexteils um zumindest ein Drittel, tendenziell sogar um zumindest 50%, kleiner ist als bei bisher üblichen Apexen. Obwohl der radial innere Apexteil "klein" ist, bleibt durch sein steifes Gummimaterial (größerer Spannungswert bei 100% Dehnung) insgesamt eine hohe Wulststabilität (gute Wulsthaltbarkeit) erhalten, sodass sich der Fahrzeugluftreifen für Nutzfahrzeuge hervorragend zur Runderneuerung eignet. Insbesondere ist die Wulsthaltbarkeit - im Vergleich zu aktuell üblichen einteiligen Apexen - deutlich verbessert.

Der folglich im Hinblick auf seine Querschnittsfläche größer als bisher üblich ausgeführte, radial äußere Apexteil besteht aus einem Gummimaterial, dessen Rückprallelastizität bei 70°C deutlich größer ist als jene des Gummimateriales des radial inneren Apexteils. Das Gummimaterial des radial äußeren Apexteils ist somit im Hinblick auf den Rollwiderstand des Reifens optimiert. Der Rollwiderstand ist dabei insbesondere im Vergleich zu bekannten Fahrzeugluftreifen für Nutzfahrzeuge mit den bisher üblichen zweiteiligen Apexen deutlich verbessert (geringer Rollwiderstand). Der erfindungsgemäße Fahrzeugluftreifen für Nutzfahrzeuge ist somit im Hinblick auf den zwischen dem Rollwiderstand und der Wulststabilität bestehenden Zielkonflikt deutlich verbessert.

Ziel ist, einen Reifen mit verbessertem Rollwiderstand und höherer Tragfähigkeit bereitzustellen, ohne dass die Laufleistung des Reifens reduziert wird. Eine höhere Tragfähigkeit erfordert eine Verbesserung der Haltbarkeit des gesamten Reifens, insbesondere im Bereich des Gürtels, des Wulstes und des Profils, und eine Reduzierung der Abriebsgeschwindigkeit des Laufstreifens, da üblicherweise eine Erhöhung der Reifenlast zu einer erhöhten Abriebsgeschwindigkeit führt.

Durch Verwendung eines Profils mit geringem Rillenleervolumen beispielsweise erzielt durch den Einsatz nur weniger Rillen oder Rillen mit einer kleinen Breite, lässt sich die Abriebsleistung des Profils signifikant steigern und damit der erhöhte Abrieb durch die elektrifizierungsbedingte Auflastung kompensieren. Diese verbesserte Abriebsleistung ergibt sich aus verschiedenen Gründen. Zum einem wird das Gummivolumen durch Reduzierung des Rillenleervolumens erhöht. Es steht also mehr Gummimischung für die Abriebsleistung zur Verfügung. Zusätzlich wird die Robustheit des Profils erhöht, was sich durch eine reduzierte Riss- oder Schnittbildung im Profil ergibt. Auch dies führt zu einer erhöhten Abriebsleistung des Profils. Überraschenderweise sorgt die Reduzierung des Rillenleervolumens durch die erhöhte Steifigkeit des Profils zu einer verringerten Bewegung im Profil, was die Haltbarkeit des Profils gegenüber der Bildung von Rissen verbessert. Außerdem führt die Reduzierung des Rillenleervolumens dazu, dass die radiale Flächenpressung zwischen der Profiloberfläche und der Straßenoberfläche reduziert wird. Diese reduzierte Flächenpressung führt dazu, dass die Beschädigung der Laufflächenoberfläche durch Steine verringert wird, was zu einer erhöhten Profihaltbarkeit beiträgt. Diese reduzierte radiale Flächenpressung führt auch zu einer verringerten Abriebsrate, was sich positiv auf die Abriebsleistung des Profils auswirkt. Diese Effekte, nämlich reduzierte Flächenpressung und reduzierte Profilbeweglichkeit, wirken sich insbesondere bei Reifen mit erhöhter Traglast positiv auf die Abriebsleistung des Profils aus, da bei Reifen mit erhöhter Traglast üblicherweise Flächenpressung und Profilbeweglichkeit erhöht werden.

Die erhöhte Steifigkeit des Profils, die zu einer Verringerung der Bewegung im Profil führt, verbessert den Reifenrollwiderstand. Diese Reduzierung des Rollwiderstandes, und dementsprechend die Reduzierung von Dissipation, führt zu einer reduzierten thermischen Belastung des Gürtelpaketes. Diese reduzierte thermische Belastung, insbesondere im Bereich des Reifenkopfes mit dem Gürtelpaket, ermöglicht eine höhere Belastung des Reifens, wie sie sich durch eine erhöhte Traglast ergibt. Gleichzeitig würden, aufgrund der höheren Traglast, die Reifen aber schneller im Wulst ausfallen bzw. die Runderneuerbarkeit des Wulsts verringert werden. Durch die höhere Last (42 t Gesamtgewicht erlaubt anstelle von 40 t ohne Elektrifizierung) und auch durch die erhöhten Drehmomente und häufigen Bremseingriffe wird der Wulst stärker erhitzt, wodurch er ebenfalls häufiger ausfällt oder nicht mehr so oft runderneuert werden kann. Durch Verwendung eines Wulsts mit optimierter Steifigkeitsverteilung wird jedoch überraschenderweise nicht nur der Rollwiderstand, sondern auch die Haltbarkeit des Wulsts erhöht und somit den Effekten der höheren Last entgegengewirkt. Diese erhöhte Wulsthaltbarkeit ist deshalb überraschend, da die optimierte Steifigkeitsverteilung im Wulst mit einer Reduzierung der Steifigkeit im Wulstbereich verbunden ist. Hierdurch können Bewegungen im Wulstbereich ansteigen, was üblicherweise für die Wulsthaltbarkeit, und damit Traglastfähigkeit, nicht vorteilhaft ist. Da sich die optimierte Steifigkeitsverteilung aber positiv auf den Rollwiderstand auswirkt, wird im Wulstbereich weniger Energie dissipiert, wodurch im Wulst eine reduzierte thermische Belastung vorliegt. Überraschenderweise hat sich gezeigt, dass die reduzierte thermische Belastung einen so hohen positiven Effekt auf die Wulsthaltbarkeit hat, das die Wulsthaltbarkeit, und damit die Traglastfähigkeit des Reifens, ansteigt. Durch die hohe Last bei der Auflastung rückt die niedrige Hitzeentwicklung dieser Wulstkonstruktion also in den Vordergrund und sorgt für eine erhöhte Rissbeständigkeit und langsamere Alterung des Gummimaterials. Zusätzlich wirkt sich die Kombination dieser Wulstkonstruktion mit dem Profil (=geringes Rillenleervolumen) vorteilhaft auf die Wulsthaltbarkeit aus. Wird im Reifenkopf weniger Energie dissipiert, wird auch weniger Wärmeenergie vom Reifenkopf in die Reifenkavität (also in den mit Luftdruck gefüllten Hohlraum des Reifens) übertragen. Damit sinkt das Temperaturniveau in der Reifenkavität. Dies trägt zu einer weiteren Reduzierung der thermischen Beanspruchung des Reifenwulstes bei, was sich zusätzlich positiv auf die Wulsthaltbarkeit und damit die Traglastfähigkeit des Reifens auswirkt. Durch die Kombination der beiden Maßnahmen lässt sich der Rollwiderstand in beiden Arealen des Reifens deutlich verbessern und somit die Reichweite der Batterien wesentlich verbessern. Nur in Kombination der Maßnahmen lässt sich überraschenderweise zusätzlich die Haltbarkeit wesentlich verbessern, wodurch die Auflastung erst möglich wird. Hingegen als Maßnahme zur Kompensation der Auflastung nur die Wulsthaltbarkeit zu erhöhen, würde dennoch die Haltbarkeit des Reifens verringern, da durch die hohe Last der Laufstreifen aufgrund der höheren Flächenpressung und stärkeren Profilbewegung anfälliger für Schäden wäre und weiterhin einen höheren Abrieb erfahren würde. Durch die Kombination wird somit die Auflastung möglich, dadurch in der Folge die Nachhaltigkeit der Reifen durch verbesserte Runderneuerbarkeit erhöht. Erwartbar wäre bei der Auflastung eine geringere Haltbarkeit aufgrund der höheren thermischen Belastung und stärkeren Deformation durch die höhere Last, wie bereits eingangs erläutert. In der Reifenrunderneuerung käme es folglich zu einer höheren Rate an Reifen, die aufgrund von durch diese Mehrbelastung entstandenen Schäden als nicht runderneuerbar aussortiert und entsorgt würden. Die Kombination der Merkmale entsprechend dieser Anmeldung sorgt hingegen nicht für die erwartbare Reduzierung der Haltbarkeit und Runderneuerbarkeit, sondern für eine gleichbleibende oder tendenziell verbesserte Haltbarkeit und Runderneuerbarkeit trotz der höheren Last.

Durch die Kombination mit einer Nullgradgürtellage lässt sich eine weitere Auflastung und Verbesserung (Reduzierung) der Abriebsrate realisieren, da die Haltbarkeit nicht nur in Wulst und Laufstreifen, sondern auch im Gürtelpaket deutlich erhöht wird.

Durch diese vorteilhaften Ausführungen wird die Nachhaltigkeit über fünf Aspekte deutlich erhöht: a) niedrigerer Rollwiderstand und damit niedrigerer Energieverbrauch im Betrieb, b) bessere Haltbarkeit, c) höhere Abriebsbeständigkeit, d) bessere Runderneuerbarkeit und e) nachhaltige Materialien.

Gemäß einer bevorzugten Ausführungsform umfasst die Materialmischung(en) von einer, bevorzugt zwei, insbesondere bevorzugt aller drei der folgenden Bauteile mindestens 5 phr aus Reisschalen-Asche hergestelltes Silica: erste Wulstfüllung, zweite Wulstfüllung und Laufstreifen. Dies ist im Hinblick auf die zu lösende Aufgabe besonders günstig, da der Fahrzeugluftreifen neben einem verbesserten Rollwiderstand und verbesserter Haltbarkeit zusätzlich über eine höhere Nachhaltigkeit verfügt und somit die gesellschaftlichen Anforderungen an moderne Produkte besonders gut erfüllt.

Gemäß einer weiteren bevorzugten Ausführungsform umfasst die Materialmischung(en) von einer, bevorzugt zwei, insbesondere bevorzugt aller drei der folgenden Bauteile mindestens 7%, bevorzugt 10%, besonders bevorzugt 15%, insbesondere bevorzugt über 20% recyceltes Material: erste Wulstfüllung, zweite Wulstfüllung und Laufstreifen. Dies ist im Hinblick auf die zu lösende Aufgabe aufgrund der erhöhten Nachhaltigkeit wie zuvor erläutert besonders günstig.

Gemäß einer weiteren bevorzugten Ausführungsform ist der Gürtel aus wenigstens drei von radial innen nach radial außen aufeinander liegend angeordneten Gürtellagen ausgebildet, wobei die Gürtellagen in einer schwefelvernetzbaren Gummimischung eingebettete Festigkeitsträger enthalten, die in jeder Gürtellage jeweils parallel zueinander verlaufen, und wobei eine der zwischen einer radial inneren und einer radial äußeren Gürtellagen, vorzugsweise zwischen einer radial inneren und einer radial äußeren als Kreuzlagen bzw. Arbeitslagen ausgebildeten Gürtellagen angeordnete Gürtellage eine als Nullgradlage ausgebildete Gürtellage ist, die in Umfangsrichtung oder zur Umfangsrichtung unter einem Winkel, welcher von der Umfangsrichtung um maximal ± 5° abweicht, verlaufen. Diese z.B. aus der WO 2011/101046 A1 bekannte Gürtellage sorgt für eine hohe Umfangssteifigkeit, was für einen gleichmäßigen Abrieb des Laufstreifens in den Schulterbereichen vorteilhaft ist. Dies ist im Hinblick auf die zu lösende Aufgabe besonders günstig.

Gemäß einer bevorzugten Ausführungsform umfasst die Materialmischung des Nullgradgürtels mindestens 5 phr aus Reisschalen-Asche hergestelltes Silica. Dies ist im Hinblick auf die zu lösende Aufgabe aufgrund der zuvor bereits erläuterten erhöhten Nachhaltigkeit besonders günstig.

Gemäß einer bevorzugten Ausführungsform umfasst die Materialmischung des Nullgradgürtels mindestens 7%, bevorzugt 10%, besonders bevorzugt 15%, insbesondere bevorzugt über 20% recyceltes Material. Dies ist im Hinblick auf die zu lösende Aufgabe aufgrund der zuvor bereits erläuterten erhöhten Nachhaltigkeit besonders günstig.

Zu den recycelten Materialien zählen alle in der Industrie gängigen oder neuartigen recycelten Materialien, wie z.B. "recovered carbon blacks" (also recycelte Ruße (r-CB)), Regenerat (Reclaim) hergestellt aus Altreifen und anderen gebrauchten Gummiartikeln (u.a. Förderbänder, Keilriemen, Schläuche...) oder hergestellt aus Kunststoffartikeln, Pyrolyseöl (TPO: tyre pyrolysis oil) sowie die daraus hergestellten Materialien (u.a. Leichtöle, Schweröle, Ruß (s-CB), Harze (s-Resins) und Prozesshilfsmittel (s-Plasticizer)).

Gemäß einer bevorzugten Ausführungsform beträgt der Flächeninhalt der Querschnittsfläche der ersten Wulstfüllung 70% bis 140%, insbesondere 75% bis 130%, bevorzugt 80% bis 120%, besonders bevorzugt bis zu 100%, des Flächeninhalts der Querschnittsfläche des Wulstkerns. Dies trägt zu einer weiteren Reduktion des Rollwiderstands des Fahrzeugluftreifens bei.

Gemäß einer bevorzugten Ausführungsform beträgt der Spannungswert bei 100% Dehnung des Gummimateriales der ersten Wulstfüllung 150% bis 2500%, bevorzugt 175% bis 800%, besonders bevorzugt 200% bis 500%, eines Spannungswertes der zweiten Wulstfüllung. Dies trägt zu einer weiteren Reduktion des Rollwiderstands des Fahrzeugluftreifens bei.

Gemäß einer bevorzugten Ausführungsform beträgt eine Rückprallelastizität bei 70°C der zweiten Wulstfüllung 130% bis 250%, bevorzugt 140% bis 200% einer Rückprallelastizität der ersten Wulstfüllung. Dies trägt zu einer weiteren Reduktion des Rollwiderstands des Fahrzeugluftreifens bei.

Gemäß einer bevorzugten Ausführungsform beträgt der Spannungswert bei 100% Dehnung des Gummimaterials der zweiten Wulstfüllung 0,50 MPa bis 9,00 MPa, bevorzugt 2,50 MPa bis 6,00 MPa und die Rückprallelastizität bei 70°C des Gummimateriales der ersten Wulstfüllung 25% bis 65%, vorzugsweise zumindest 40%. Dies ist für die Wulsthaltbarkeit günstig.

Gemäß einer bevorzugten Ausführungsform ist die zumindest eine Karkasseinlage einlagig ausgeführt und endet in jedem Wulstbereich als Karkasshochschlag mit einer in radialer Richtung ermittelten Höhe (h₁), wobei die erste Wulstfüllung an ihrer der Reifeninnenseite zugewandten, die Karkasseinlage kontaktierenden Seite eine in radialer Richtung ermittelte, maximale Höhe (h₂) von 60% bis 100%, insbesondere von 70% bis 90%, der Höhe (h₁) des Karkasshochschlags (4a) aufweist, wobei sich die maximale Höhe (h₂) und die Höhe (h₁) auf eine Linie (L) beziehen, welche, im Reifenquerschnitt betrachtet, in axialer Richtung durch einen mit dem Felgeneckpunkt korrespondierenden Punkt (X) am Wulstbereich des Nutzfahrzeugreifens verläuft. Diese Ausführung ist ebenfalls für den Rollwiderstand und die Wulsthaltbarkeit von zusätzlichem Vorteil.

Gemäß einer bevorzugten Ausführungsform weist der Fahrzeugluftreifen einen nach ISO 28580 ermittelten Rollwiderstand von unter 4,5 kg/t, besonders bevorzugt unter 4,0 kg/t auf. Diese Ausführung ist ebenfalls für den Rollwiderstand und die Wulsthaltbarkeit von zusätzlichem Vorteil.

Gemäß der Erfindung ausgeführte Fahrzeugluftreifen sind Reifen für mehrspurige Nutzfahrzeuge, vorzugsweise für mittelschwere LKWs (7,5 t < zGM ≤ 18,0 t), für schwere LKWs (zGM > 18,0 t) oder für Busse.

Der Fahrzeugluftreifen für Nutzfahrzeuge ist insbesondere zur Montage auf einer 15°-Tiefbettfelge vorgesehen, welche gemäß dem European Tyre and Rim Technical Organisation Standards Manual ("E.T.R.T.O-Standards") in der aktuell geltenden Fassung (Stand 19.07.2022), Abschnitt 15° Drop-Center Rims (width codes 5,25 to 18,00) mit nominalen Durchmessern von 17,5 Zoll, 19,5 Zoll, 20,5 Zoll, 22,5 Zoll oder 24,5 Zoll ausgeführt ist.

Weitere Merkmale, Vorteile und Einzelheiten der Erfindung werden nun anhand der Figuren erläutert.
Fig. 1 zeigt einen Querschnitt durch einen Wulstbereich eines vulkanisierten Fahrzeugluftreifens für Nutzfahrzeuge. Der zweite, nicht gezeigte Wulstbereich ist übereinstimmend zum gezeigten Wulstbereich ausgeführt.
Fig. 2 zeigt eine Ansicht einer weiteren Ausführungsform eines erfindungsgemäßen Fahrzeugluftreifens für Nutzfahrzeuge.
Fig. 3 zeigt eine Ansicht einer weiteren Ausführungsform eines erfindungsgemäßen Fahrzeugluftreifens für Nutzfahrzeuge im Querschnitt.

Die nachfolgend angegebenen Höhen sind in radialer Richtung (angedeutet durch den Doppelpfeil R) gemessen und beziehen sich jeweils auf eine Linie L, welche bei auf einer passenden Felge aufgezogenem, nicht aufgepumptem Fahrzeugluftreifen, im Reifenquerschnitt betrachtet, in axialer Richtung (angedeutet durch den Doppelpfeil A) durch einen mit dem Felgeneckpunkt korrespondierenden Punkt X am jeweiligen Wulstbereich des Nutzfahrzeugreifens verläuft. Unter der axialen Richtung wird die parallel zur Rotationsachse des Fahrzeugluftreifens verlaufende Richtung verstanden. Die radiale Richtung entspricht der im Reifenquerschnitt senkrecht zur axialen Richtung verlaufenden Richtung. Der Felgeneckpunkt ist bekannterweise der Schnittpunkt der Felgenschulter mit dem Felgenhorn. Die Ermittlung der Höhen erfolgt mit einem auf einer Felge aufgebrachten, aus einem vulkanisierten Fahrzeugluftreifen herausgeschnittenen Reifenumfangsabschnitt. Alternativ kann die Ermittlung der Höhen mittels Computertomographie erfolgen.

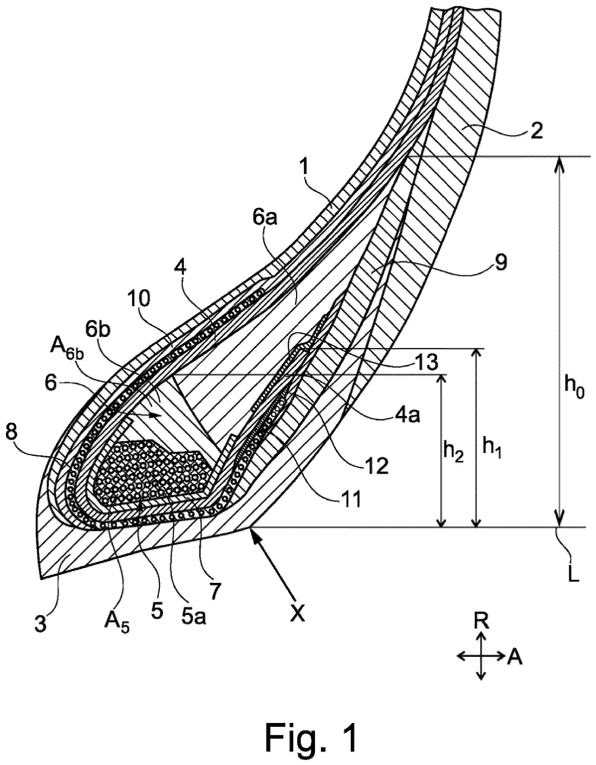

In Fig. 1 sind von den Bauteilen des Fahrzeugluftreifens für Nutzfahrzeuge ein Abschnitt einer luftdichten Innenschicht 1, ein Abschnitt einer Seitenwand 2, ein Hornprofil 3, ein Abschnitt einer einlagigen Karkasseinlage 4, ein Wulstkern 5, ein auf dem Wulstkern 5 sitzender, zweiteiliger Apex 6, eine Kernfahne 7, ein Stahlkordwulstverstärker 8, ein Füllprofil 9 und ein Füllprofil 10 gezeigt. Sämtliche dieser Bauteile verlaufen über den gesamten Reifenumfang, sind also in Umfangsrichtung ringförmig umlaufende Bauteile.

Die Seitenwand 2 überlappt im Ausführungsbeispiel reifenaußenseitig das Hornprofil 3. Die Karkasseinlage 4 besteht aus in Gummi eingebetteten, kreuzungsfrei sowie im Wesentlichen parallel zueinander verlaufenden Stahlkorden, wobei die Karkasseinlage 4 in bekannter Weise zwischen den beiden Wulstkernen 5 verläuft, um jeden Wulstkern 5 von der der Innenschicht 1 zugewandten Reifeninnenseite kommend in Richtung Reifenaußenseite umgeschlagen ist und reifenaußenseitig neben dem Apex 6 als Karkasshochschlag 4a in einer Höhe h1 von 25,0 mm bis 50,0 mm, bevorzugt von 30,0 mm bis 45,0 mm endet. Die Kernfahne 7 besteht aus einem gummierten Textilgewebe, insbesondere aus gummiertem Nylongewebe, und ist derart um den Wulstkern 5 gelegt, dass sie die Karkasseinlage 4 vom Wulstkern 5 trennt. Der Stahlkordwulstverstärker 8 besteht aus in Gummi eingebetteten, kreuzungsfrei sowie im Wesentlichen parallel zueinander verlaufenden Stahlkorden, verläuft in Kontakt mit der dem Wulstkern 5 abgewandten Seite der Karkasseinlage 4 und endet reifeninnenseitig und reifenaußenseitig jeweils im Bereich des Apexes 6, wobei er reifenaußenseitig vor dem Ende des Karkasshochschlags 4a endet. Das Füllprofil 9 befindet sich reifenaußenseitig des Wulstkerns 5 und des Apexes 6, verläuft - jeweils abschnittsweise - zwischen dem Stahlkordwulstverstärker 8 und dem Hornprofil 3, zwischen dem Karkasshochschlag 4a und dem Hornprofil 3 sowie zwischen dem Apex 6 und dem Hornprofil 3 bzw. der Seitenwand 2. Das Füllprofil 10 verläuft zwischen den beiden Wulstbereichen, befindet sich in jedem Wulstbereich reifeninnenseitig des Wulstkerns 5 und des Apexes 6 und verläuft in jedem Wulstbereich abschnittsweise zwischen dem Stahlkordwulstverstärker 8 und der Innenschicht 1 sowie abschnittsweise zwischen der Innenschicht 1 und der Karkasseinlage 4.

Der Wulstkern 5 besteht aus in Umfangsrichtung umlaufendem, in Gummimaterial eingebettetem, zugfestem Kerndraht 5a, welcher insbesondere aus Metall gefertigt ist und vorzugsweise einen kreisförmigen Querschnitt aufweist. Der Wulstkern 5a wird in bekannter Weise durch Aufwickeln eines einzigen in Gummimaterial eingebetteten Kerndrahtes 5a oder durch Aufwickeln einer Vielzahl von in Gummimaterial eingebetteten Kerndrähten 5a gebildet. Der Wulstkern 5 weist, im Reifenquerschnitt betrachtet, eine Querschnittsfläche mit einem Flächeninhalt A5 auf. Bei einem Wulstkern 5 aus einem einzigen Kerndraht 5a errechnet sich der Flächeninhalt A5 der Querschnittsfläche des Wulstkerns 5 aus der maximalen Anzahl der Windungen multipliziert mit dem Flächeninhalt der Querschnittsfläche des Kerndrahts 5a. Die Anzahl der Windungen kann - in Abhängigkeit der Stelle des Querschnittes - um eine Windung variieren. Die "maximale Anzahl der Windungen" ist die Anzahl der Windungen an einer Stelle, an welcher die größte Anzahl an Windungen vorzufinden ist. Bei einem Wulstkern 5 aus einer Vielzahl von Kerndrähten 5a errechnet sich der Flächeninhalt A5 der Querschnittsfläche des Wulstkerns 5 aus der Anzahl der Kerndrähte 5a multipliziert mit dem Flächeninhalt der Querschnittsfläche eines Kerndrahtes 5a. Bei der Ermittlung des Flächeninhalts A5 bleibt das den Kerndraht 5a bzw. die Kerndrähte 5a umgebende Gummimaterial daher unberücksichtigt.

Der zweigeteilte Apex 6 setzt sich aus einem den Wulstkern 5 vorzugsweise nicht kontaktierenden, aus einem Gummimaterial bestehenden, radial äußeren Apexteil 6a und einem den Wulstkern 5 kontaktierenden, ebenfalls aus einem Gummimaterial bestehenden, radial inneren Apexteil 6b zusammen. Die Gummimaterialen der Apexteile 6a, 6b unterscheiden sich im Hinblick auf ihre Spannungswerte bei 100% Dehnung sowie im Hinblick auf ihre Rückprallelastizitäten bei 70°C, wie nachfolgend noch erläutert wird.

Der radial innere Apexteil 6b weist beim gezeigten Ausführungsbeispiel, im Reifenquerschnitt betrachtet, eine im Wesentlichen dreieckige Querschnittsfläche auf, läuft an seinem dem Wulstkern 5 abgewandten Ende entlang eines reifeninnenseitig verlaufenden Abschnittes der Karkasseinlage 4 aus und reicht bis in eine maximale Höhe h2 (Höhe an der höchsten Stelle), welche 60% bis 100%, insbesondere 70% bis 90%, der bereits erwähnten Höhe h1 des Karkasshochschlags 4a beträgt. Die Querschnittsfläche des radial inneren Apexteils 6b weist einen Flächeninhalt A6b auf, welcher 60% bis 160%, insbesondere 70% bis 140%, bevorzugt 75% bis 130%, besonders bevorzugt 80% bis 120%, am meisten bevorzugt bis zu 100%, des Flächeninhalts A5 der Querschnittsfläche des Wulstkerns 5 beträgt.

Der radial äußere Apexteil 6a verläuft, im Reifenquerschnitt betrachtet, zwischen den Karkasshochschlag 4a und dem radial inneren Apexteil 6b hinein, trennt derart gemeinsam mit der Kernfahne 7 den radial inneren Apexteil 6b vom Karkasshochschlag 4a und reicht in radialer Richtung bis in eine Höhe h0, welche größer ist als die bereits erwähnte Höhe h1 des Karkasshochschlags 4a.

Die bereits erwähnten Spannungswerte bei 100% Dehnung wurden gemäß DIN 53504 (Prüfung von Kautschuk und Elastomeren - Bestimmung von Reißfestigkeit, Zugfestigkeit, Reißdehnung und Spannungswerten im Zugversuch (Ausgabe 2017-03), Prüfkörpertyp S3) ermittelt.

Die Rückprallelastizität bei 70°C wurde gemäß ISO 4662 (Elastomere oder thermoplastische Elastomere - Bestimmung der Rückprallelastizität von Vulkanisaten (Ausgabe 2017-06, Pendulum method gemäß Abschnitt 5)) ermittelt, wobei die Dicke des Prüfkörpers 6,3 mm ± 0,5 mm betrug.

Die Rückprallelastizität bei 70°C dient als Indikator für den Rollwiderstand des Reifens, wobei eine hohe Rückprallelastizität bei 70°C einen geringen Rollwiderstand bedeutet.

Das Gummimaterial des radial äußeren Apexteils 6a weist einen Spannungswert bei 100% Dehnung auf, welcher 0,50 MPa bis 9,00 MPa, insbesondere 0,75 MPa bis 7,50 MPa, bevorzugt 1,00 MPa bis 6,00 MPa, und besonders bevorzugt 2,50 MPa bis 5,00 MPa beträgt. Das Gummimaterial des radial inneren Apexteils 6b weist einen Spannungswert bei 100% Dehnung - ermittelt nach DIN 53504 mit dem Prüfkörpertyp S3 - auf, welcher 120% bis 6000% größer ist als der Spannungswert bei 100% Dehnung des Gummimateriales des radial äußeren Apexteils 6a.

Das Gummimaterial des radial äußeren Apexteils 6a weist ferner eine Rückprallelastizität bei 70°C - ermittelt nach ISO 4662 mit einem Prüfkörper mit einer Dicke von 6,3 mm ± 0,5 mm - auf, welche 110% bis 300% größer ist als die Rückprallelastizität bei 70°C des Gummimateriales des radial inneren Apexteils 6b. Das Gummimaterial des radial inneren Apexteils 6b weist eine Rückprallelastizität bei 70°C auf, welche 25% bis 65%, insbesondere 30% bis 60%, und vorzugsweise zumindest 40% beträgt.

Beim gezeigten Ausführungsbeispiel sind reifenaußenseitig des Apexes 6 drei aus Gummi bestehende, in Umfangsrichtung umlaufende Verstärkungsstreifen 11, 12, 13 verbaut. Der Verstärkungsstreifen 11 verläuft zwischen dem Karkasshochschlag 4a und dem Stahlkordwulstverstärker 8. Der Verstärkungsstreifen 12 verläuft über seine gesamte Erstreckung in Kontakt mit dem Füllprofil 9 sowie jeweils abschnittsweise in Kontakt mit dem Stahlkordwulstverstärker 8, dem Karkasshochschlag 4a und dem radial äußeren Apexteil 6a. Der Verstärkungsstreifen 13 deckt das freie Ende des Karkasshochschlags 4a ab und verläuft jeweils abschnittsweise in Kontakt mit dem radial äußeren Apexteil 6a und dem Verstärkungsstreifen 12. Im Wulstbereich des Reifens können weitere Festigkeitsträger enthaltende Verstärkungslagen sowie weitere aus Gummi bestehende Verstärkungsstreifen verbaut sein. Die Karkasseinlage 4 kann mehrlagig, insbesondere zwei- oder dreilagig, ausgeführt sein. Bei einer mehrlagigen Karkasseinlage können die Karkasshochschläge der Lagen der Karkasseinlage in voneinander abweichenden Höhen enden. Der radial innere Apexteil 6b kann, im Reifenquerschnitt betrachtet, eine von der dreieckigen Querschnittsfläche abweichende Querschnittsfläche aufweisen. Die bereits erwähnte maximale Höhe h2 des radial inneren Apexteils 6b beträgt 60% bis 100%, insbesondere 70% bis 90%, der Höhe des höchsten Karkasshochschlags. Die Kernfahne 7, der Stahlkordwulstverstärker 8 sowie die Verstärkungsstreifen 11, 12, 13 sind optional. Die Querschnittsfläche des Wulstkerns ist insbesondere sechseckig oder kreisförmig. Alternativ weist die Querschnittsfläche des Wulstkerns eine von der Form eines Hexagons bzw. eines Kreises abgeleitete Form auf. Eine solche abgeleitete Form ist beispielsweise eine Querschnittsfläche in Form eines Hexagons mit einem etwa parallelogrammförmig ausgesparten Eckbereich.

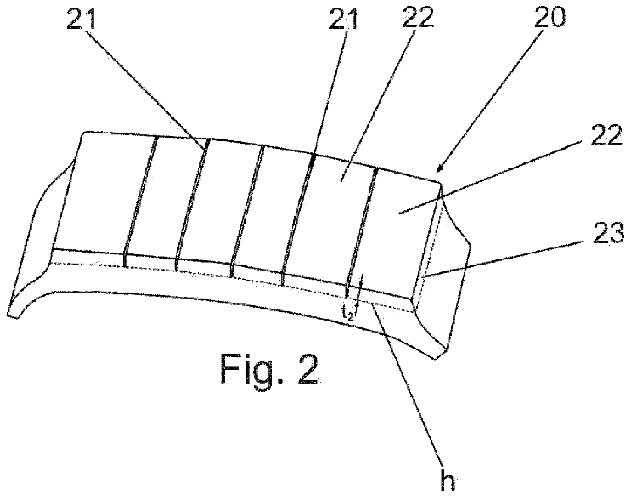

Die Figur 2 zeigt eine zweite Ausführungsform eines erfindungsgemäß ausgeführten Fahrzeugluftreifens für Nutzfahrzeuge. Der Laufstreifen 20 des Fahrzeugluftreifens für Nutzfahrzeuge ist durch fünf in Umfangsrichtung geradlinig umlaufende schmale Umfangsrillen 21 in sechs Umfangsrippen 22 gegliedert. Die beiden schulterseitig verlaufenden Umfangsrippen 22 sind etwas breiter als die im mittleren Bereich des Laufstreifens 20 verlaufenden vier Umfangsrippen 22, deren Breiten übereinstimmen. Bei der in Figur 2 gezeigten Ausführung sind sämtliche schmale Umfangsrillen 21 übereinstimmend ausgeführt, eine die radial inneren Enden der Umfangsrillen 21 tangierende Hilfslinie h versinnbildlicht eine parallel zur Laufstreifenperipherie umlaufende Einhüllende, die gemeinsam mit schulterseitigen Flankenabschnitten 23 und der Laufstreifenperipherie das Reifenprofilvolumen F umschließt. Auch bei dieser Ausführungsvariante beträgt das Rillenleervolumen Vp als Summe sämtlicher Volumina der
schmalen Umfangsrillen 21 zwischen 1 % und 10%, insbesondere bis zu 7% und vorzugsweise zwischen 1% und 4%, des Reifenprofilvolumens.

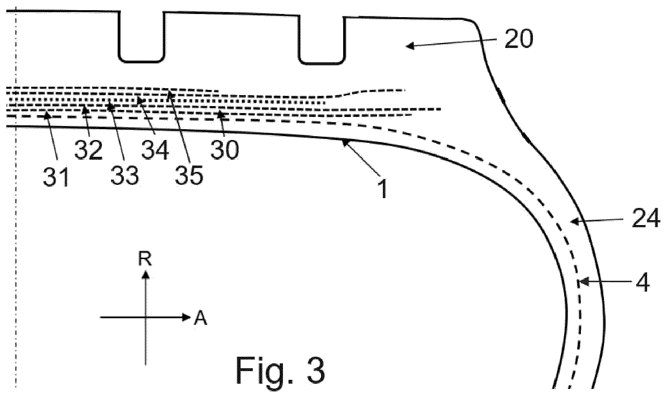

Die Figur 3 zeigt einen LKW-Reifen im Querschnitt mit einem Laufstreifen 20, einer Seitenwand 24, einer Innenschicht 1, einer Karkasse 4, einem Gürtelpaket 30 sowie den Gürtellagen 31, 32, 33, 34 und 35. Dabei ist eine der Lagen als Nullgradlage ausgeführt.

Die Erfindung ist auf die beschriebenen Ausführungsbeispiele nicht beschränkt.

### Bezugszeichenliste

- 1: Innenschicht
- 2: Seitenwand
- 3: Hornprofil
- 4: Karkasseinlage
- 4a: Karkasshochschlag
- 5: Wulstkern
- 5a: Kerndraht
- 6: Apex
- 6a: zweite Wulstfüllung / radial äußerer Apexteil
- 6b: erste Wulstfüllung / radial innerer Apexteil
- 7: Kernfahne
- 8: Stahlkordwulstverstärker
- 9: Füllprofil
- 10: Füllprofil
- 11: Verstärkungslage
- 12: Verstärkungslage
- 13: Verstärkungslage
- A: Doppelpfeil (axiale Richtung)
- A5: Flächeninhalt
- A6b: Flächeninhalt
- h0: Höhe
- h1: Höhe
- h2: maximale Höhe
- L: Linie
- R: Doppelpfeil (radiale Richtung)
- X: Punkt
- 20: Laufstreifen
- 21: Umfangsrillen
- 22: Umfangsrippen
- 23: Flankenabschnitt
- 24: Seitenwand
- 30: Gürtelpaket
- 31, 32, 33, 34, 35: Gürtellagen

## Patentansprüche

1. Fahrzeugluftreifen für Nutzfahrzeuge,
umfassend zumindest eine Wulst und einen Laufstreifen (20) mit einem eine Rillentiefe definierenden Rillenprofil,
wobei der Laufstreifen (20) eine radial außen verlaufende Lauffläche und eine zu der Laufflächenperipherie parallel verlaufende, von der Lauffläche in Höhe der Rillentiefe beabstandete Begrenzungsfläche aufweist,
wobei ein durch das Rillenprofil definiertes Rillenleervolumen 1% bis 10% eines durch die Lauffläche, die Begrenzungsfläche und schulterseitige Flankenabschnitte (23) des Laufstreifens (20) definierten Reifenprofilvolumens beträgt,
**dadurch gekennzeichnet, dass**
die Wulst einen Wulstkern (5), eine an den Wulstkern (5) angrenzende erste Wulstfüllung (6b) und eine an die erste Wulstfüllung angrenzende zweite Wulstfüllung (6a) umfasst,
wobei ein Spannungswert bei 100% Dehnung - ermittelt nach DIN 53504 mit dem Prüfkörpertyp S3 - der ersten Wulstfüllung 120% bis 6000% eines Spannungswertes der zweiten Wulstfüllung beträgt,
wobei eine Rückprallelastizität bei 70°C - ermittelt nach ISO 4662 mit einem Prüfkörper mit einer Dicke von 6,3 mm ± 0,5 mm- der zweiten Wulstfüllung 110% bis 300% einer Rückprallelastizität der ersten Wulstfüllung beträgt,
und eine Querschnittsfläche der ersten Wulstfüllung (6b) 60% bis 160% einer Querschnittsfläche des Wulstkernes (5) ist.

2. Fahrzeugluftreifen nach Anspruch 1, **dadurch gekennzeichnet, dass** die Materialmischung(en) von einer, bevorzugt zwei, insbesondere bevorzugt aller drei der folgenden Bauteile mindestens 5 phr aus Reisschalen-Asche hergestelltes Silica umfasst: Erste Wulstfüllung (6b), Zweite Wulstfüllung (6a), Laufstreifen (20).

3. Fahrzeugluftreifen nach Anspruch 1, **dadurch gekennzeichnet, dass** die Materialmischung(en) von einer, bevorzugt zwei, insbesondere bevorzugt aller drei der folgenden Bauteile mindestens 7%, bevorzugt 10%, besonders bevorzugt 15%, insbesondere bevorzugt über 20% recyceltes Material umfasst: Erste Wulstfüllung (6b), Zweite Wulstfüllung (6a), Laufstreifen (20).

4. Fahrzeugluftreifen nach einem der vorhergehenden Ansprüche,
**dadurch gekennzeichnet, dass**
der Gürtel aus wenigstens drei von radial innen nach radial außen aufeinander liegend angeordneten Gürtellagen (32, 33, 34) ausgebildet ist, wobei die Gürtellagen (32, 33, 34) in einer schwefelvernetzbaren Gummimischung eingebettete Festigkeitsträger enthalten, die in jeder Gürtellage (32, 33, 34) jeweils parallel zueinander verlaufen, und wobei eine der zwischen einer radial inneren und einer radial äußeren Gürtellagen (32, 34), vorzugsweise zwischen einer radial inneren und einer radial äußeren als Kreuzlagen bzw. Arbeitslagen ausgebildeten Gürtellagen (32, 34) angeordnete Gürtellage (33) eine als Nullgradlage ausgebildete Gürtellage (33) ist, die in Umfangsrichtung oder zur Umfangsrichtung unter einem Winkel, welcher von der Umfangsrichtung um maximal ± 5° abweicht, verlaufen.

5. Fahrzeugluftreifen nach Anspruch 4, **dadurch gekennzeichnet, dass** die Materialmischung des Nullgradgürtels mindestens 5 phr aus Reisschalen-Asche hergestelltes Silica umfasst.

6. Fahrzeugluftreifen nach Anspruch 4 oder 5, **dadurch gekennzeichnet, dass**
die Materialmischung des Nullgradgürtels mindestens 7%, bevorzugt 10%, besonders bevorzugt 15%, insbesondere bevorzugt über 20% recyceltes Material umfasst.

7. Fahrzeugluftreifen nach einem der vorhergehenden Ansprüche,
**dadurch gekennzeichnet, dass** der Flächeninhalt der Querschnittsfläche der ersten Wulstfüllung (6b) 70% bis 140%, insbesondere 75% bis 130%, bevorzugt 80% bis 120%, besonders bevorzugt bis zu 100%, des Flächeninhalts der Querschnittsfläche des Wulstkerns (5) beträgt.

8. Fahrzeugluftreifen nach einem der vorhergehenden Ansprüche,
**dadurch gekennzeichnet, dass** der Spannungswert bei 100% Dehnung des Gummimateriales der ersten Wulstfüllung (6b) 150% bis 2500%, bevorzugt 175% bis 800%, besonders bevorzugt 200% bis 500%, eines Spannungswertes der zweiten Wulstfüllung (6a) beträgt.

9. Fahrzeugluftreifen nach einem der vorhergehenden Ansprüche,
**dadurch gekennzeichnet, dass** eine Rückprallelastizität bei 70°C der zweiten Wulstfüllung (6a) 130% bis 250%, bevorzugt 140% bis 200% einer Rückprallelastizität der ersten Wulstfüllung (6b) beträgt.

10. Fahrzeugluftreifen nach einem der vorhergehenden Ansprüche,
**dadurch gekennzeichnet, dass** der Spannungswert bei 100% Dehnung des Gummimateriales der zweiten Wulstfüllung (6a) 0,50 MPa bis 9,00 MPa, bevorzugt 2,50 MPa bis 6,00 MPa beträgt und die Rückprallelastizität bei 70°C des Gummimateriales der ersten Wulstfüllung (6b) 25% bis 65%, vorzugsweise zumindest 40% beträgt.

11. Fahrzeugluftreifen nach einem der vorhergehenden Ansprüche,
**dadurch gekennzeichnet, dass** die zumindest eine Karkasseinlage (4) einlagig ausgeführt ist und in jedem Wulstbereich als Karkasshochschlag mit einer in radialer Richtung ermittelten Höhe (h₁) endet, wobei die erste Wulstfüllung (6b) an ihrer der Reifeninnenseite zugewandten, die Karkasseinlage (4) kontaktierenden Seite eine in radialer Richtung ermittelte, maximale Höhe (h₂) von 60% bis 100%, insbesondere von 70% bis 90%, der Höhe (h₁) des Karkasshochschlags (4a) aufweist, wobei sich die maximale Höhe (h₂) und die Höhe (h₁) auf eine Linie (L) beziehen, welche, im Reifenquerschnitt betrachtet, in axialer Richtung durch einen mit dem Felgeneckpunkt korrespondierenden Punkt (X) am Wulstbereich des Fahrzeugluftreifens verläuft.

12. Fahrzeugluftreifen nach einem der vorhergehenden Ansprüche,
**dadurch gekennzeichnet, dass** dieser einen nach ISO 28580 ermittelten Rollwiderstand von unter 4,5 kg/t, besonders bevorzugt unter 4,0 kg/t aufweist.
